# FASCICULE DE BREVET EUROPEEN

(11) **EP 0 970 874 B1**
(45) Date de publication et mention de la délivrance du brevet: **09.04.2003**
(21) Numéro de dépôt: 99420139.0
(22) Date de dépôt: 18.06.1999
(51) Int. Cl.: B62D 5/22

(54) **Procédé pour la réduction de la dispersion du couple sur une valve d'assistance pour direction assistée hydraulique de véhicule automobile**
Verfahren zum Vermindern der Drehmomentverteilung auf ein Hilfsventileiner hydraulischen Kraftfahrzeug-Servolenkung
Method of reducing the dispersion of torque on a valve for a hydraulic power steering system of a motor vehicle

(30) Priorité: 09.07.1998 FR 9808998
(43) Date de publication de la demande: 12.01.2000
(73) Titulaire: Société de Mécanique d'Irigny, 69540 Irigny (FR)
(72) Inventeur: Brunon, Christian, 42800 Dargoire (FR)
(74) Mandataire: Bratel, Gérard

(56) Documents cités:
- EP-A- 0 067 572
- EP-A- 0 396 895
- FR-A- 2 752 809

## Description

La présente invention concerne les valves d'assistance pour direction assistée hydraulique de véhicule automobile. Plus particulièrement, cette invention se rapporte à un procédé qui permet, dans le cadre de la production industrielle de telles valves d'assistance, de réduire la dispersion du couple de la "loi de valve".

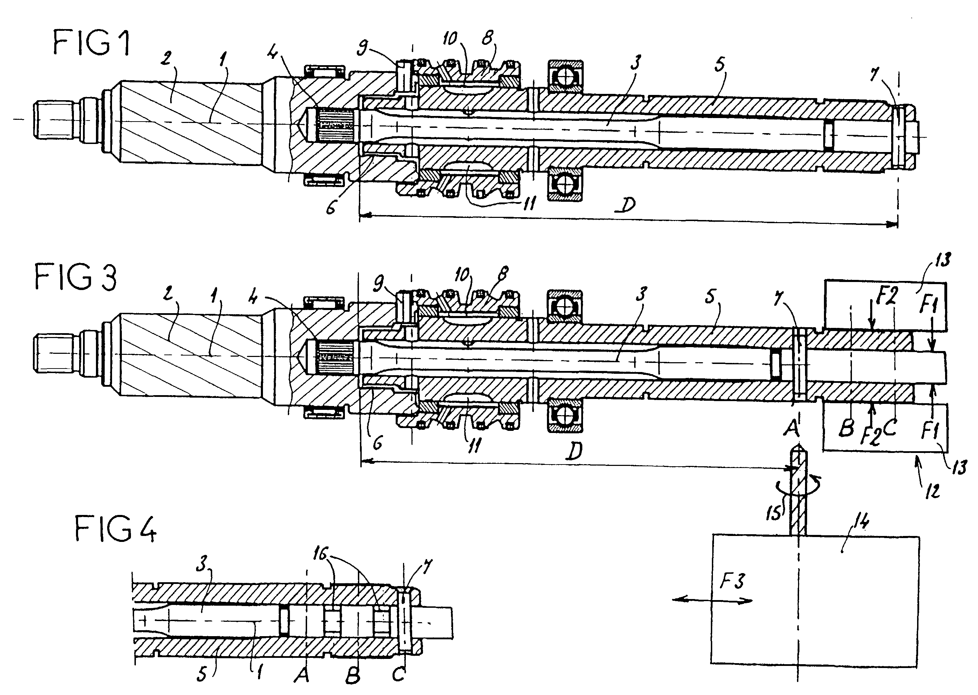

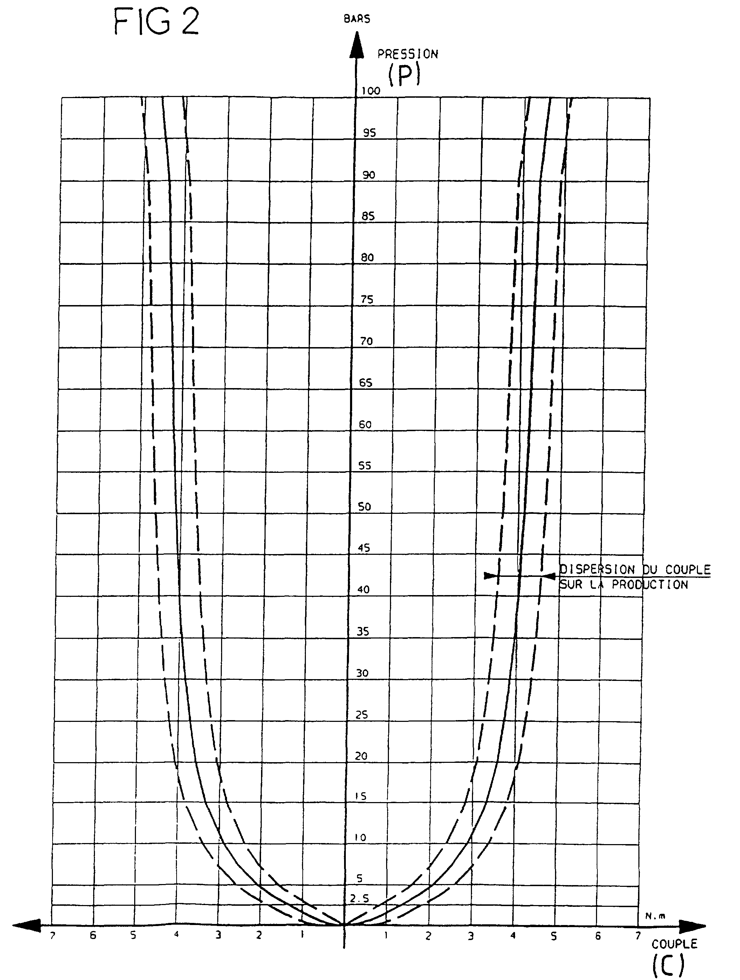

La figure 1 du dessin schématique annexé représente, en coupe longitudinale, une valve d'assistance traditionnelle (telle que connue par exemple par la demande de brevet français FR 2752809 ou son équivalent européen EP 0827892 au nom du Demandeur), pour en rappeler la structure et le principe de fonctionnement, et pour expliquer le problème à la base de la présente invention.

La valve d'assistance comprend, disposé suivant son axe longitudinal 1, un pignon 2 qui est prévu pour venir en permanence en prise avec une crémaillère (non représentée) de la direction assistée. Une barre de torsion 3, disposée suivant l'axe longitudinal 1, est liée au pignon 2 par une liaison rigide 4, à une extrémité de cette barre de torsion 3. Un rotor 5 de forme générale tubulaire, monté autour de la barre de torsion 3, est centré par l'une de ses extrémités dans le pignon 2, par l'intermédiaire d'un palier 6 qui lui permet un débattement angulaire sans contrainte, mais limité par une butée positive (non représentée) prévue entre ce rotor 5 et le pignon 2. Le rotor 5 est centré, en son autre extrémité, sur la barre de torsion 3, et il est lié rigidement à cette dernière, vers cette extrémité, par un élément de liaison, notamment une goupille 7.

Une chemise 8, entourant partiellement le rotor 5, est centrée sur ce rotor 5 et liée angulairement au pignon 2 par une autre goupille 9. Des rainures complémentaires de distribution hydraulique 10, 11 sont aménagées sur la chemise 8, et dans la zone du rotor 5 recouverte par la chemise 8, afin de permettre le passage du fluide hydraulique vers l'une ou l'autre des chambres de vérin de la direction assistée hydraulique. En fonctionnement, les positions angulaires relatives des rainures 10, 11 définissent des sections de passage variables pour le fluide hydraulique.

Plus particulièrement, en cours de fonctionnement de la valve d'assistance, il s'exerce sur le pignon 2 un couple résistant (provenant de l'adhérence des roues du véhicule et transmis par l'intermédiaire de la crémaillère), et sur le rotor 5 un couple d'entrée provenant du volant de direction du véhicule. Ces deux couples sont de sens contraires, et ils sollicitent la barre de torsion 3, en entraînant un décalage angulaire entre le rotor 5 d'une part, et la chemise 8 (liée angulairement au pignon 2) d'autre part. Ce décalage angulaire ouvre, proportionnellement au couple résultant, le passage hydraulique vers une chambre de vérin, en même temps que la chambre opposée est mise en communication avec le circuit de retour hydraulique. La pression du fluide hydraulique dirigé vers l'une des chambres de vérin, dite "pression d'assistance", augmente au fur et à mesure que le décalage angulaire grandit, et est donc une fonction croissante du couple appliqué sur la valve d'assistance.

Ce fonctionnement de la valve d'assistance est caractérisé par une "loi de valve d'assistance", qui est la loi P = f (C) de variation de la pression d'assistance en fonction du couple, représentée par la courbe de la figure 2.

Pour déterminer la loi de valve d'assistance, on bloque en rotation le pignon 2 par un dispositif rigide, et l'on applique sur le rotor 5 un couple, dans le sens horaire puis dans le sens anti-horaire, ce qui correspond respectivement au braquage à droite et au braquage à gauche du véhicule. Pendant l'application du couple sur le rotor 5, la pression augmente dans le circuit hydraulique correspondant. C'est cette pression hydraulique qui est mesurée, en fonction du couple appliqué sur le rotor 5, les points de mesure ainsi déterminés définissant la courbe, donc la loi de valve d'assistance.

Pour une valve d'assistance d'un type donné, cette loi est notamment déterminée par les caractéristiques de la barre de torsion 3, laquelle joue un rôle de ressort et permet d'adapter le couple nécessaire pour décaler angulairement le rotor 5 par rapport à la chemise 8, afin de répondre aux spécifications des constructeurs automobiles. Cette caractéristique de la barre de torsion 3 est appelée raideur angulaire ; elle dépend de la géométrie de ladite barre de torsion, donc de la définition des divers diamètres et longueurs caractérisant géométriquement cette barre.

La distance de torsion libre de la barre de torsion 3, c'est-à-dire la distance axiale entre la liaison rigide 4 avec le pignon 2 et la liaison par goupille 7 avec le rotor 5, intervient aussi sur la raideur finale de la barre de torsion 3. Cette distance est une cote prédéfinie D qui dépend, en particulier, de la position axiale de la goupille 7 sur le rotor 5 et la barre de torsion 3. En l'état actuel de la technique, la goupille 7 a, pour un type donné de valve d'assistance, une seule position axiale, donc une position invariable. L'usinage nécessaire (perçage diamétral simultané de la barre de torsion 3 et du rotor 5) pour emmancher la goupille 7 dans sa position prédéfinie est réalisé, à l'assemblage de la valve d'assistance, après avoir effectué un réglage hydraulique afin d'obtenir une courbe de loi de valve identique (symétrique) pour le braquage à droite et le braquage à gauche.

Toutefois, comme l'illustrent les tracés en pointillés de la figure 2, il existe pour un ensemble de valves d'assistance, théoriquement identiques, une dispersion des valeurs de couple, pour une pression donnée. Autrement dit, pour une même pression P, le couple appliqué C peut être plus ou moins important, ceci en raison des imprécisions d'usinage et autres variations de paramètres géométriques ou d'assemblage intervenant sur les sections de passage hydraulique ainsi que sur le raideur de la barre de torsion 3. En particulier, les imprécisions d'usinage des rainures de distribution hydraulique 10, 11, résultant des limites des moyens d'usinage industriels utilisés, influent directement sur la dispersion de la loi de valve. La géométrie de la barre de torsion 3, et la distance de torsion libre D de cette barre, présentent aussi des variations qui influent sur la raideur de ladite barre de torsion, donc sur la dispersion de la loi de valve. La conjugaison de ces causes conduit à une dispersion non négligeable, comme l'illustre la figure 2.

La présente invention vise à éviter l'inconvénient que constitue une telle dispersion de la loi de valve d'assistance, et son but est donc de réduire fortement la dispersion du couple, pour obtenir pratiquement une même pression d'assistance, sur un nombre important de valves produites industriellement.

A cet effet, l'invention a pour objet un procédé pour la réduction de la dispersion du couple sur une valve d'assistance pour direction assistée hydraulique de véhicule automobile, le procédé consistant, pour chaque valve d'assistance produite, à adapter la raideur de la barre de torsion et/ou de la liaison entre cette barre de torsion et le rotor de la valve d'assistance, en fonction de la différence entre la loi de valve ou loi d'assistance mesurée pour cette valve, et la loi théorique du type de valve d'assistance concerné.

Ainsi, l'idée inventive consiste à adapter ou modifier en particulier la raideur de la barre de torsion, en fonction de la différence constatée entre la loi de valve mesurée et celle théorique, afin de "recentrer" au mieux la loi de valve réelle par rapport à la loi théorique souhaitée. L'opération étant répétée individuellement pour chaque valve d'assistance produite, cette solution permet de réduire la dispersion de la loi de valve, sur l'ensemble d'une production industrielle plus ou moins importante.

L'adaptation peut être faite, dans le cadre de la présente invention, selon diverses modalités, éventuellement combinées entre elles.

Selon un premier mode de mise en oeuvre du procédé objet de l'invention, l'adaptation de la raideur de la barre de torsion est effectuée par sélection de la position axiale de la goupille de liaison entre cette barre de torsion et le rotor de la valve d'assistance, de manière à modifier la distance de torsion libre de ladite barre de torsion. Dans le cadre de ce mode de mise en oeuvre, il est notamment envisageable de prédéfinir plusieurs positions axiales de la goupille de liaison entre la barre de torsion et le rotor, chaque position axiale correspondant à une distance libre de torsion différente de la barre de torsion, et de positionner la goupille de liaison, pour chaque valve d'assistance, dans celle des positions axiales prédéfinies qui se rapproche le plus de la position idéale. Selon une variante, une plage de réglage en continu de la position axiale de ladite goupille de liaison est prédéfinie, et pour chaque valve d'assistance, cette goupille de liaison est positionnée axialement, à l'intérieur de la plage de réglage, dans la position idéale calculée.

Selon une autre possibilité, l'adaptation de la raideur de la barre de torsion est effectuée par l'aménagement, sur cette barre de torsion, d'une ou plusieurs gorges annulaires, qui en diminuent localement la section et induisent ainsi une diminution de raideur.

Les possibilités précédemment indiquées peuvent être combinées, notamment en prévoyant que l'aménagement de gorges de diminution de raideur est réalisé, sur la barre de torsion, entre les différentes positions axiales prédéfinies de la goupille de liaison.

Selon encore une autre possibilité, l'adaptation de chaque valve d'assistance est effectuée en utilisant, pour la liaison entre la barre de torsion et le rotor, un élément de liaison qui possède une raideur propre modifiable. En pratique, une telle adaptation sera effectuée en utilisant sélectivement une goupille de liaison pleine ou creuse, ou en choisissant le type de goupille ici utilisé.

Dans tous les cas, il convient d'effectuer, sur chaque valve d'assistance, une mesure individuelle, préalable à l'adaptation de cette valve d'assistance en termes de raideur. A cet effet, une mesure de la loi de valve ou de la loi d'assistance est faite, pour chaque valve d'assistance, avant mise en place de la goupille de liaison entre la barre de torsion et le rotor, en assurant provisoirement cette liaison par un outillage extérieur à la valve d'assistance, le résultat de cette mesure étant comparé à la loi théorique pour commander un outillage d'adaptation de la raideur de la barre de torsion et/ou de la liaison entre cette barre de torsion et le rotor. L'outillage assurant provisoirement la liaison entre la barre de torsion et le rotor est constitué avantageusement par un ensemble de serrage, comprenant des mâchoires agissant sur l'extrémité extérieure de la barre de torsion, et sur l'extrémité correspondante du rotor. Quant à l'outillage d'adaptation de la raideur de la barre de torsion, et/ou de la liaison entre cette barre de torsion et le rotor, celui-ci peut être réalisé sous la forme d'une unité de perçage et de mise en place de goupilles, déplaçable suivant le direction axiale de la valve d'assistance, pour adapter la position axiale de la goupille de liaison. Bien entendu, cette unité doit aussi adapter la position angulaire de la goupille, pour la disposer en correspondance avec le point neutre de la valve d'assistance.

L'invention sera mieux comprise à l'aide de la description qui suit, se référant au dessin schématique annexé illustrant, à titre d'exemples, des modes de mise en oeuvre de ce procédé pour la réduction de la dispersion du couple sur une valve d'assistance pour direction assistée hydraulique :
Figure 1 (déjà citée) est une vue en coupe longitudinale d'une valve d'assistance traditionnelle ;
Figure 2 (déjà citée) indique la courbe représentative de la loi de valve d'assistance, pour une telle valve ;
Figure 3 est une vue en coupe longitudinale d'une valve d'assistance, en cours d'adaptation par le procédé objet de la présente invention, avec indication des outillages utilisés pour la mise en oeuvre de ce procédé ;
Figure 4 est une vue partielle, en coupe longitudinale, d'une valve analogue, illustrant une variante de ce procédé.

Sur la figure 3, une valve d'assistance est de nouveau représentée, les éléments structurels correspondant à ceux précédemment décrits (en référence à la figure 1) étant désignés par les mêmes repères numériques, et ne nécessitant pas de nouvelle description.

Comme montré sur la partie droite de la figure 3, trois positions axiales distinctes, repérées respectivement A, B et C, sont prévues selon l'invention pour le positionnement de la goupille 7 qui doit assurer la liaison entre la barre de torsion 3, d'une part, et le rotor 5, d'autre part. L'adaptation de la valve d'assistance, en vue d'obtenir la loi de valve souhaitée, est effectuée en choisissant pour la goupille 7, parmi les trois positions A, B et C prédéfinies, la position se rapprochant le plus de la position idéale. Comme on le comprend aisément, ce choix de position permet de modifier la distance de torsion libre D de la barre de torsion 3, entre sa liaison rigide 4 avec le pignon 2 et la goupille 7, d'où une adaptation de la raideur globale de la barre de torsion 3.

Plus particulièrement, cette adaptation est effectuée comme suit :

Avant mise en place de la goupille de liaison 7, un outillage 12 extérieur à la valve d'assistance intervient pour assurer provisoirement une liaison rigide, entre l'extrémité extérieure de la barre de torsion 3 et l'extrémité correspondante du rotor 5. L'outillage 12 est constitué par un ensemble de serrage, comprenant des mâchoires 13 agissant sur les extrémités respectives de la barre de torsion 3 et du rotor 5, comme indiqué par les flèches F1 et F2. Pendant que l'outillage 12 assure cette liaison, les mâchoires 13 étant serrées, une première mesure de la loi de valve P = f (C) est faite, et une comparaison est effectuée, entre la loi de valve mesurée et celle théorique.

En fonction de la différence constatée, pour chaque valve d'assistance, entre la loi de valve mesurée et la loi théorique, on calcule la modification nécessaire sur la raideur de la barre de torsion 3, et on adapte la position d'une unité 14 de perçage et de mise en place de goupilles, déplaçable parallèlement à l'axe longitudinal 1 de la valve d'assistance, suivant la double flèche F3, et pourvue d'un outil de perçage 15. Ainsi, l'outil 15 est amené en correspondance avec l'une des trois positions A, B et C prédéfinies, par exemple la position A (figure 3) ou la position C (figure 4), avant d'être actionné pour percer simultanément le rotor 5 et la barre de torsion 3. La goupille de liaison 7 est finalement enfoncée dans le perçage réalisé, et elle occupe ainsi la position la plus appropriée.

En variante, au lieu de positions discrètes A, B et C, la position axiale de la goupille de liaison 7 peut aussi être ajustée en continu, à l'intérieur d'une plage de réglage prédéfinie, par exemple une plage s'étendant de la position extrême A à l'autre position extrême C.

Selon une autre variante, ou en complément de ce qui précède, et comme l'illustre la figure 4, l'adaptation de la raideur globale de la barre de torsion 3 est effectuée par l'aménagement de gorges annulaires 16 sur cette barre de torsion 3, les gorges 16 diminuant localement la section de ladite barre 3. Les gorges 16 sont ici creusées entre les différentes positions axiales prédéfinies A, B et C de la goupille de liaison 7.

L'on ne s'éloignerait pas du cadre de l'invention, telle que définie dans les revendications :
- en prévoyant des positions axiales prédéfinies plus ou moins nombreuses, pour la goupille de liaison 7 entre la barre de torsion 3 et le rotor 5 ;
- en prévoyant toutes formes appropriées, pour les gorges 16 de diminution de raideur de la barre de torsion ;
- en mettant à profit le choix de la goupille de liaison 7, entre la barre de torsion 3 et le rotor 5, pour effectuer l'adaptation souhaitée, ceci en lieu et place de la sélection de la position axiale de la goupille 7, ou en combinaison avec cette sélection de position axiale ;
- en mettant en oeuvre le procédé avec des outillages différents de ceux décrits et illustrés ;
- en destinant ce procédé à des valves d'assistance pour direction assistée hydraulique, dont le détail de forme ou de structure différerait de l'exemple illustré au dessin.

## Revendications

1. Procédé pour la réduction de la dispersion du couple sur une valve d'assistance pour direction assistée hydraulique de véhicule automobile, la valve d'assistance comprenant, disposés suivant son axe longitudinal (1), un pignon (2) prévu pour venir en prise avec une crémaillère de direction assistée, une barre de torsion (3) liée au pignon (2) par une liaison rigide (4), à une extrémité, un rotor tubulaire (5) monté autour de la barre de torsion (3) et lié à l'autre extrémité de ladite barre de torsion (3) par un élément de liaison, notamment une goupille (7), et une chemise (8) entourant partiellement le rotor (5) et liée angulairement (en 9) au pignon (2), des rainures de distribution hydraulique (10, 11) étant aménagées sur la chemise (8) et dans la zone correspondante du rotor (5), caractérisé en ce qu'il consiste, pour chaque valve d'assistance produite, à adapter la raideur de la barre de torsion (3) et/ou de la liaison (7) entre cette barre de torsion (3) et le rotor (5) de la valve d'assistance, en fonction de la différence entre la loi de valve P = f (C) ou loi d'assistance mesurée pour cette valve, et la loi théorique du type de valve d'assistance concerné, P étant la pression d'assistance et C le couple appliqué.

2. Procédé selon la revendication 1, **caractérisé en ce que** l'adaptation de la raideur de la barre de torsion (3) est effectuée par sélection de la position axiale de la goupille (7) de liaison entre cette barre de torsion (3) et le rotor (5) de la valve d'assistance, de manière à modifier la distance de torsion libre (D) de ladite barre de torsion (3).

3. Procédé selon la revendication 2, **caractérisé en ce que** plusieurs positions axiales (A, B, C) de la goupille (7) de liaison entre la barre de barre de torsion (3) et le rotor (5) sont prédéfinies, chaque position axiale correspondant à une distance libre de torsion différente de la barre de torsion (3), et **en ce que** l'on positionne la goupille de liaison (7), pour chaque valve d'assistance, dans celle des positions axiales (A, B, C) prédéfinies qui se rapproche le plus de la position idéale.

4. Procédé selon la revendication 2, **caractérisé en ce qu'**une plage de réglage en continu de la position axiale de la goupille de liaison (7) est prédéfinie, et **en ce que**, pour chaque valve d'assistance, cette goupille de liaison (7) est positionnée axialement, à l'intérieur de la plage de réglage, dans la position idéale calculée.

5. Procédé selon l'une quelconque des revendications 1 à 4, **caractérisé en ce que** l'adaptation de la raideur de la barre de torsion (3) est effectuée par l'aménagement, sur cette barre de torsion (3), d'une ou plusieurs gorges annulaires (16), qui en diminuent localement la section et induisent ainsi une diminution de raideur.

6. Procédé selon l'ensemble des revendications 3 et 5, **caractérisé en ce que** l'aménagement des gorges (16) de diminution de raideur est réalisé, sur la barre de torsion (3), entre les différentes positions axiales (A, B, C) prédéfinies de la goupille de liaison (7).

7. Procédé selon l'une quelconque des revendications 1 à 6, **caractérisé en ce que** l'adaptation de chaque valve d'assistance est effectuée en utilisant, pour la liaison entre la barre de torsion (3) et le rotor (5), un élément de liaison (7) qui possède une raideur propre modifiable.

8. Procédé selon la revendication 7, **caractérisé en ce que** l'adaptation est effectuée en utilisant sélectivement une goupille de liaison (7) pleine ou creuse, ou en choisissant le type de goupille utilisé.

9. Procédé selon l'une quelconque des revendications 1 à 8, **caractérisé en ce qu'**une mesure de la loi de valve P = f (C) ou de la loi d'assistance est faite, pour chaque valve d'assistance, avant mise en place de la goupille (7) de liaison entre la barre de torsion (3) et le rotor (5), en assurant provisoirement cette liaison par un outillage (12) extérieur à la valve d'assistance, le résultat de cette mesure étant comparé à la loi théorique pour commander un outillage (14) d'adaptation de la raideur de la barre de torsion (3) et/ou de la liaison (7) entre cette barre de torsion (3) et le rotor (5).

10. Procédé selon la revendication 9, **caractérisé en ce que** l'outillage assurant provisoirement la liaison entre la barre de torsion (3) et le rotor (5) est constitué par un ensemble de serrage (12), comprenant des mâchoires (13) agissant sur l'extrémité extérieure de la barre de torsion (3) et sur l'extrémité correspondante du rotor (5).

11. Procédé selon l'ensemble des revendications 2 et 9, **caractérisé en ce que** l'outillage d'adaptation de la raideur de la barre de torsion (3), et/ou de la liaison entre cette barre de torsion (3) et le rotor (5), est réalisé sous la forme d'une unité (14) de perçage et de mise en place de goupilles, déplaçable suivant la direction axiale (1) de la valve d'assistance, pour adapter la position axiale de la goupille de liaison (7).

## Claims

1. A method for reducing the spread on the torque of a control valve for motor vehicle hydraulically-assisted steering, the control valve comprising, arranged along its longitudinal axis (1), a pinion (2) that is designed to mesh with a power-assisted steering rack, a torsion bar (3) connected to the pinion (2) by a rigid connection (4) at one end, a tubular spool (5) mounted around the torsion bar (3) and connected to the other end of said torsion bar (3) by a connecting element, particularly a pin (7), and a sleeve (8) partially surrounding the spool (5) and connected angularly (at 9) to the pinion (2), hydraulic fluid control grooves (10,11) being formed in the sleeve (8) and in the corresponding region of the spool (15), **characterized in that** said method consists, for each control valve produced, in adapting the stiffness of the torsion bar (3) and/or of the connection (7) between this torsion bar (3) and the spool (5) of the control valve according to the difference between the valve law P=f(C) of power-assistance law measured for this valve and the theoretical law for the type of control valve concerned, P being the assistance pressure and C the applied torque.

2. A method as claimed in claim 1, **characterized in that** the stiffness of the torsion bar (3) is adapted by selecting the axial position of the pin (7) that connects this torsion bar (3) with the spool (5) of the control valve, so as to alter the free torsion length (D) of said torsion bar (3).

3. A method as claimed in claim 2, wherein there are a number of predefined axial positions (A,B,C) of the pin (7) that connects the torsion bar (3) and the spool (5), each axial position corresponding to a different free torsion length of the torsion bar; and in that the connecting pin (7) is positioned, for each control valve, in that one of the predefined axial positions (A,B,C) which is closest to the ideal position.

4. A method as claimed in claim 2, **characterized in that** there is a predefined range of continuous adjustment of the axial position of the connecting pin (7) and **in that**, for each control valve, this connecting pin (7) is axially positioned, within the adjustment range, in the calculated ideal position.

5. A method as claimed in any of claims 1 through 4, **characterized in that** the stiffness of the torsion bar (3) is adapted by producing on this torsion bar (3) one or more annular grooves (16) which locally reduce its cross section and thus cause a reduction in stiffness.

6. A method as claimed in claims 3 and 5 together, **characterized in that** the stiffness-reducing grooves (16) are produced on the torsion bar (3) between the various predefined axial positions (A,B,C) of the connecting pin (7).

7. A method as claimed in any of claims 1 through 6, **characterized in that** each control valve is adapted by using, to connect the torsion bar (3) and the spool (5), a connecting element (7) whose own stiffness can be modified.

8. A method as claimed in claim 7, **characterized in that** adaptation is achieved by making selective use of a solid or hollow connecting pin (7), or by choosing the type of pin used.

9. A method as claimed in any of claims 1 through 8, **characterized in that** the valve law P=f(C) or power-assistance law is measured, for each control valve, before the pin (7) that connects the torsion bar (3) and the spool (5) is fitted, temporarily making this connection using a fixture (12) external to the control valve, the result of this measurement being compared with the theoretical law in order to command a fixture (14) for adapting the stiffness of the torsion bar (3) and/or of the connection (7) between this torsion bar (3) and the spool, (5).

10. A method as claimed in claim 9, **characterized in that** the fixture which temporarily connects the torsion bar (3) and the spool (5) consists of a clamping unit (12) comprising jaws (13) acting on the external end of the torsion bar (3) and on the corresponding end of the spool (5).

11. A method as claimed in claims 2 and 9 together, **characterized in that** the fixture for adapting the stiffness of the torsion bar (3) and/or of the connection between this torsion bar (3) and the spool (5) is produced in the form of a drilling and pinning unit (14) which can be displaced in the axial direction (1) of the control valve, to adapt the axial position of the connecting pin (7).

## Patentansprüche

1. Verfahren zur Reduzierung der Momentenstreuung auf einem Servoventil für eine hydraulische Kraftfahrzeugservolenkung, wobei das Servoventil entlang seiner Längsachse (1) angeordnet ein Ritzel (2) umfasst, das vorgesehen ist, um an einer Servolenkungszahnstange anzugreifen, einen an einem Ende durch eine starre Verbindung (4) mit dem Ritzel (2) verbundenen Torsionsstab (3), einen rohrförmigen Rotor (5), der um den Torsionsstab (3) angebracht und mit dem anderen Ende des Torsionsstabs (3) durch ein Verbindungsteil, insbesondere einen Stift (7), verbunden ist, und einen Mantel (8), der den Rotor (5) teilweise umgibt und (bei 9) mit dem Ritzel (2) winkelmäßig verbunden ist, wobei Hydraulikverteilernuten (10, 11) auf dem Mantel (8) und im entsprechenden Bereich des Rotors (5) ausgebildet sind, **dadurch gekennzeichnet dass** das Verfahren darin besteht, für jedes hergestellte Servoventil die Steifigkeit des Torsionsstabs (3) und/oder der Verbindung (7) zwischen diesem Torsionsstab (3) und dem Rotor (5) des Servoventils in Abhängigkeit vom Unterschied zwischen dem Ventilgesetz P = f (C) oder dem für dieses Ventil bestimmte Servogesetz, und dem theoretischen Gesetz des betreffenden Servoventiltyps anzupassen, wobei P der Servodruck und C das angelegte Moment ist.

2. Verfahren nach Anspruch 1, **dadurch gekennzeichnet, dass** die Anpassung der Steifigkeit des Torsionsstabs (3) durch Auswahl der axialen Position des Verbindungsstifts (7) zwischen diesem Torsionsstab (3) und dem Rotor (5) des Servoventils erfolgt, um den Abstand der freien Torsion (D) des Torsionsstabs (3) zu verändern.

3. Verfahren nach Anspruch 2, **dadurch gekennzeichnet, dass** mehrere axiale Positionen (A, B, C) des Verbindungsstifts (7) zwischen dem Stab des Torsionsstabs (3) und dem Rotor (5) vorgegeben sind, wobei jede axiale Position einem anderen freien Torsionsabstand des Torsionsstabs (3) entspricht, und dass der Verbindungsstift (7) für jedes Servoventil in derjenigen der vorgegebenen axialen Positionen (A, B, C) positioniert wird, die der Idealposition am nächsten ist.

4. Verfahren nach Anspruch 2, **dadurch gekennzeichnet, dass** ein kontinuierlicher Regelbereich für die axiale Position des Verbindungsstifts (7) vorgegeben ist, und dass für jedes Servoventil dieser Verbindungsstift (7) axial innerhalb des Regelbereichs in der berechneten idealen Position positioniert wird.

5. Verfahren nach einem der Ansprüche 1 bis 4, **dadurch gekennzeichnet, dass** die Anpassung der Steifigkeit des Torsionsstabs (3) dadurch bewerkstelligt wird, dass an diesem Torsionsstab (3) eine oder mehrere ringförmige Auskehlungen (16) ausgebildet werden, die dessen Querschnitt lokal verringern und somit eine Steifigkeitsverringerung induzieren.

6. Verfahren nach Anspruch 3 und 5, **dadurch gekennzeichnet, dass** die Ausbildung der Auskehlungen (16) zur Steifigkeitsverringerung am Torsionsstab (3) zwischen den unterschiedlichen vorgegebenen axialen Positionen (A, B, C) des Verbindungsstifts (7) stattfindet.

7. Verfahren nach einem der Ansprüche 1 bis 6, **dadurch gekennzeichnet, dass** die Anpassung jedes Servoventils dadurch stattfindet, dass für die Verbindung zwischen dem Torsionsstab (3) und dem Rotor (5) ein Verbindungsteil (7) verwendet wird, das eine veränderbare Eigensteifigkeit besitzt.

8. Verfahren nach Anspruch 7, **dadurch gekennzeichnet, dass** die Anpassung dadurch stattfindet, dass selektiv ein massiver oder hohler Verbindungsstift (7) verwendet wird oder dass der Typ des verwendeten Stifts ausgewählt wird.

9. Verfahren nach einem der Ansprüche 1 bis 8, **dadurch gekennzeichnet, dass** für jedes Servoventil eine Bestimmung des Ventilgesetzes P = f (C) erfolgt, bevor der Verbindungsstift (7) zwischen dem Torsionsstab (3) und dem Rotor (5) angebracht wird, indem diese Verbindung provisorisch durch eine Werkzeugausstattung (12) sichergestellt wird, die extern vom Servoventil ist, wobei das Ergebnis dieser Bestimmung mit dem theoretischen Gesetz verglichen wird, um eine Werkzeugausrüstung (14) zur Anpassung der Steifigkeit des Torsionsstabs (3) und/oder der Verbindung (7) zwischen diesem Torsionsstab (3) und dem Rotor (5) zu steuern.

10. Verfahren nach Anspruch 9, **dadurch gekennzeichnet, dass** die Werkzeugausrüstung, die provisorisch die Verbindung zwischen dem Torsionsstab (3) und dem Rotor (5) sicherstellt, aus einer Einspanneinheit (12) mit Klemmbacken (13) besteht, die auf das äußere Ende des Torsionsstabs (3) und auf das entsprechende Ende des Rotors (5) einwirken.

11. Verfahren nach Anspruch 2 und 9, **dadurch gekennzeichnete dass** die Werkzeugausrüstung zur Anpassung der Steifigkeit des Torsionsstabs (3) und/oder der Verbindung zwischen diesem Torsionsstab (3) und dem Rotor (5) in der Form einer Einheit (14) zum Durchbohren und zur Anbringung von Stiften realisiert wird, die entlang der axialen Richtung (1) des Servoventils verschiebbar ist, um die axiale Position des Verbindungsstifts (7) anzupassen.
